# EUROPÄISCHE PATENTSCHRIFT

(11) **EP 2 683 770 B1**
(45) Veröffentlichungstag und Bekanntmachung des Hinweises auf die Patenterteilung: **31.07.2024**
(21) Anmeldenummer: 12713872.5
(22) Anmeldetag: 09.03.2012
(51) Int. Cl.: C08K 9/08, C09C 3/10

(54) **Verfahren zur Herstellung von Zwischenprodukten für polymere Werkstoffe mit Additionskomponenten oder Bauteilen daraus, Verfahren zur Herstellung von polymeren Werkstoffen auf Basis von Zwischenprodukten, Verwendung von polymeren Werkstoffen und Verwendung von Bauteilen aus polymeren Werkstoffen**
Process for the production of intermediate products for polymeric materials with addition components or components made from them, processes for the production of polymeric materials based on intermediate products, use of polymeric materials and use of components made of polymeric materials
Procédé de fabrication de produits intermédiaires pour matériaux polymères avec des composants d'addition ou des composants fabriqués à partir de ceux-ci, procédés de production de matériaux polymères à base de produits intermédiaires, utilisation de matériaux polymères et utilisation de composants constitués de matériaux polymères

(30) Priorität: 09.03.2011 DE 102011013508; 09.03.2011 DE 102011013465
(43) Veröffentlichungstag der Anmeldung: 15.01.2014
(73) Patentinhaber: Winkelmann, Felix, 53129 Bonn (DE)
(72) Erfinder: Winkelmann, Felix, 53129 Bonn (DE)
(74) Vertreter: Rebbereh, Cornelia
(86) Internationale Anmeldenummer: PCT/EP2012/001064
(87) Internationale Veröffentlichungsnummer: WO 2012/119783

(56) Entgegenhaltungen:
- EP-A2- 1 630 206
- WO-A1-01/96459
- WO-A1-2011/029433
- WO-A1-93/11190
- US-A- 3 984 500
- US-A- 5 910 523

## Beschreibung

Die Erfindung betrifft ein Verfahren zur Herstellung von Zwischenprodukten (Compounds bzw. Halbzeuge) für polymere Werkstoffe mit Additionskomponenten oder Bauteilen daraus, ein Verfahren zur Herstellung polymerer Werkstoffe auf Basis von Zwischenprodukten, erhältlich nach dem erstgenannten Verfahren, und die Verwendung polymerer Werkstoffe und Bauteile.

Unter Zwischenprodukte werden hier sowohl Werkstoffe als auch Compounds als auch Halbzeuge verstanden. Unter Bauteilen werden Teile verstanden, die nicht weiter bearbeitet werden müssen, allenfalls mit andern zusammengeführt werden zu einer funktionierenden Einheit
In der Kunststofftechnik ist es eine übliche Vorgehensweise, die Eigenschaftsprofile der an sich bekannten Polymeren durch Beimischung (Compoundierung) von Zusatzstoffen, wie Füllstoffen und Additiven, oder durch Mischen verschiedener Kunststofftypen so zu verändern, dass sie den spezifischen Anforderungen gerecht werden.

Polymere Verbundwerkstoffe bestehen in der Regel aus mindestens zwei verschiedenen Phasen, bei denen eine der beiden Phasen üblicherweise aus einem anorganischen Material besteht. Die anorganische Phase wird dabei von einer organischen Phase umgeben. Diese organische Phase wird auch als Binder oder Harz bezeichnet, oder allgemeiner als Polymermatrix.

Verbundwerkstoffe im Sinne dieser Erfindung sind Zwei-Stoff-Systeme bzw. Mehr-Stoff-Systeme mit einer organischen Phase, die die Matrix bildet und verschiedenen anderen Phasen, die während der Verarbeitung oder des Gebrauchs nicht vollständig mit der organischen Phase mischbar sind (Additionsphase). Diese Phasengrenzen können über Haftvermittler zueinander kompatibel gemacht werden bzw. die einzelnen Phasen können mit einer Interphase modifiziert sein.

Aus der EP 1 340 788 A2 ist beispielsweise die Herstellung eines Compounds auf Basis eines thermoplastischen Kunststoffs bekannt. Wie in diesem Dokument beschrieben wird, werden Thermoplaste, z. B. Polyvinylchlorid, mit einem Vernetzungsmittel, einem Stabilisator, Kreide als Füllstoff und einem Alkylbenzophenon als Radikalbildner zu einem verarbeitungsfähigen Compound verarbeitet. Nach der Formgebung, hier Extrusion, wird durch Bestrahlung mit UV Licht das Polymer vernetzt. Die Füllstoffe werden dabei lediglich physikalisch in dem Thermoplast eingelagert und haben nur eine Füllfunktion. Nach einer Vernetzung hat das Polymer seine thermoplastische Eigenschaft weitgehend verloren.

Die WO 01/96459 A1 offenbart die Verwendung organophiler, quellfähiger speziell modifizierter Schichtsilikate bei der Herstellung nanoverstärkter, thermoplastischer Polymerer, wobei die anorganischen Schichtsilikatpartikel in Nanoverteilung kovalent an das Polymere gebunden bzw. in das Polymere eingebaut sind. Durch die spezielle Modifikation werden die Schichtsilikate befähigt, als Initiator bei der Polymerisation bzw. als Kettenbaustein bei der Polykondensation zu dienen.

Aus der WO 93/11190 A1 ist ein Verfahren zur Bildung eines Verbundmaterials bekannt, umfassend eine kontinuierliche Polymerphase, gebildet aus einem aus der Schmelze verarbeitbaren Polymer und plättchenförmigen Teilchen mit einer mittleren Dicke von gleich oder weniger als etwa 50 Ä und einer maximalen Dicke von etwa 100 Ä, und mit einem reaktiven Organo-Silan-Rest, der kovalent an der Oberfläche dieser Teilchen gebunden ist, und Organo-Silan-Spezies, die kovalent gebunden sind an eine Polymer-Spezies in der Polymermatrix, wobei die plättchenförmigen Teilchen in einem Anteil von weniger als 60 Gew.% des Verbundmaterials vorliegen.

Die EP 1 630 206 A2 offenbart Trübungspartikel, enthaltend ein Pigmentteilchen mit einem durchschnittlichen Partikeldurchmesser von 0,005 bis 5 µm und einem Brechungsindex von mindestens 1,8, ein erstes Polymer auf der Oberfläche des Pigmentpartikels, über einen Silanrest gebunden, und ein zweites Polymer, das im Wesentlichen das Pigmentpartikel einkapselt, mit dem ersten angebundenen Polymer. Es ist ferner ein Verfahren zur Bildung der Trübungsteilchen als eine Beschichtungszusammensetzung und eine Kunststoffzusammensetzung, enthaltend das Trübungsteilchen, offenbart.

Aus der US 5,910,523 A sind Verbundwerkstoffe aus einem semi-kristallinen Polyolefin und nanometergroße Füllstoffe mit verbessertem E-Modul, Zugfestigkeit und Widerstand gegen Bruchwachstum bekannt. Die nanometergroßen Füllstoffe werden zuerst mit einem Aminosilan funktionalisiert. Danach wird ein carboxylierter oder Maleat-Polyolefin auf den Füllstoff durch eine Amin-Carboxyl-Reaktion gepfropft. Der resultierende modifizierte Füllstoff wird in einem semikristallinen Polyolefin (z.B. Polyethylen oder Polypropylen) dispergiert. Die Co-Kristallisation von carboxylierten oder Maleat-Polyolefin und dem semi-kristallinen Polyolefin kann die Wechselwirkung zwischen dem Füllstoff und dem semi-kristallinen Polyolefin verbessern.

Die WO 2011/029433 A1 offenbart die Verwendung eines Lösungsmittels, in dem ein Radikalstarter gelöst ist, und das auf einer mineralischen Komponente verteilt wird. Es sind ferner Zwischenprodukte für polymere Werkstoffe mit mineralischen Komponenten, einem Radikalstarter und ggf. anderen Beimischungen offenbart, wobei der Radikalstarter die Oberfläche der oberflächenmodifizierten silikatischen Komponente bedeckt und die Polymerketten an der Oberfläche der modifizierten silikatischen Komponente gebunden sind.

Aus der US 3,956,230 A ist ein auf Polyolefine bezogenes Verfahren bekannt, bei dem Monomere zugeführt werden und eine Polymerisation am Partikel erfolgt.

Aufgabe der vorliegenden Erfindung ist der Einsatz von Additionskomponenten im einfachen Fall in Form von Füllstoffkomponenten, als Komponenten in Polymer-Compounds auf Basis synthetischer Kunststoffe oder mit Kunststoffen auf Basis nachwachsender Rohstoffe zur Erhöhung beispielsweise der mechanischen Stabilität, der Reißfestigkeit, der Schlagzähigkeit, der Kratzfestigkeit, des E-Moduls, der chemischen Beständigkeit etc. Additionskomponenten sind Bestandteile des Compounds, die mit dem Matrixpolymer nicht oder nur gering mischbar sind.

Die Aufgabe wird durch ein Verfahren zur Herstellung von Zwischenprodukten für polymere Werkstoffe nach Anspruch 1 gelöst. Die Aufgabe wird ferner durch ein Verfahren zur Herstellung von polymeren Werkstoffen nach Anspruch 8 gelöst.

Offenbart werden Zwischenprodukte (Compounds/Halbzeuge) für polymere Werkstoffe und Bauteile mit Additionskomponenten, die gegebenenfalls oberflächenmodifiziert sein können, einem Radikalbildner, einem Matrixpolymer und gegebenenfalls anderen Beimischungen, wobei die Polymerketten der Matrixphase mit der Oberfläche der Additionsphase (z.B. einer Füllstoffkomponente oder Faserkomponente) chemisch vernetzt sind. Erfindungsgemäß kann dabei die Vernetzung gegebenenfalls auch bzw. in Anteilen über einen Haftvermittler oder Teilen des Radikalbildners gegeben sein.

Im Vergleich zu an sich bekannten Polymer-Compounds ist in den vorliegend offenbarten Compounds auf Basis der vorliegend offenbarten Zwischenprodukte die Additionsphase (z.B. Füllstoffkomponente oder Faserkomponente) mit den Polymerketten des Matrixpolymers chemisch vernetzt und nicht nur physikalisch eingelagert. Im Gegensatz zu anderen vernetzten Thermoplasten, liegt die Vernetzung im Sinne dieser Erfindung vorrangig an der inneren Oberfläche vor, während der Rest der thermoplastischen Matrix im Wesentlichen weiter unvernetzt vorliegt und damit einer thermoplastischen Weiterverarbeitung bzw. einem Recycling zugänglich ist.

Gemäß der vorliegenden Erfindung weisen die Compounds eine erhöhte chemische und mechanische Stabilität wie z. B. die Festigkeit oder die Reißfestigkeit oder die Schlagzähigkeit oder den E-Modul im Vergleich zu Compounds mit eingelagerten Additionskomponenten wie z.B. Füllstoffkomponenten oder mit Haftvermittlern oberflächenmodifizierten Füllstoffkomponenten auf. Auch für nicht-mineralische Additionskomponenten (wie z. B. Textilfasern, etc.) ergeben sich ganz neue Werkstoffeigenschaften.

Mit den beschriebenen Zwischenprodukten erschließt sich eine neue Klasse von polymeren Verbundwerkstoffen (Polymer-Compounds).

Die Additionskomponenten (z.B. Füllstoffkomponenten) können in zwei Gruppen aufgeteilt werden:
a) anorganische Komponenten für die polymeren Verbundwerkstoffe im Rahmen der vorliegenden Erfindung sind z. B. mineralische Komponenten, Silikate enthaltende Materialien bzw. silikatische Strukturen aufweisende Materialien oder Metalloxide bzw. oxidische Strukturen aufweisende Materialien oder Metallhydroxide bzw. hydroxidische Strukturen aufweisende Materialien, Carbide oder Kohlenstoffhaltige Materialien wie Ruß, Kohlenstofffasern, Kohlenstoffnanoröhrchen diverser Struktur, Fullerene, oder Nitride oder stickstoffhaltige Komponenten, Carbonate, Sulfate oder Oxide bzw. Oxihydrate, Fasern (Glas- oder Basaltfaser) oder Mischungen daraus.
b) Organische Komponenten sind vorzugsweise solche, die mit dem Matrixpolymer bei Verarbeitungs- oder Gebrauchszuständen keine wesentliche Mischung bilden: Duroplaste, Thermoplaste, Elastomere oder Thermoplastische Elastomere (als Polymere, Prepolymere oder Oligomere), die alle in partikulärer Form (z. B. als Partikel, Faser oder Plättchen) vorliegen oder Fasern (Textilfasern, technische Fasern) oder auch natürliche Rohstoffe wie Naturfasern wie z. B. Hanf, Sisal, etc.

Mineralische Komponenten im Rahmen der vorliegenden Erfindung können sein

Silikate: natürliche und synthetische Silikate, pyrogene und gefällte Kieselsäuren, so genannte Insel-Silikate, Ketten-Silikate, Band-Silikate, Netzsilikate, Schichtsilikate oder Alumosilikate, Minerale der Gruppe der Quarze (Quarz, Quarzgut, Cristobalit), Zeolithe, Feldspäte, Calciumsilikat-Phasen-Mineralien oder Caciulsilikathydratphasenmineralien (z. B. Tobermorit oder Xonotlit) oder
Metalloxide: natürliche oder synthetische Metalloxide wie Aluminiumoxid, Siliziumdioxid, Magnesiumoxid, Calciumoxid, Titandioxid, Eisenoxide, Zinkoxid. Metallhydroxide: Magnesiumhydroxid, Aluminumhydroxid, etc .

Dies ist natürlich nur eine beispielhafte Aufzählung von möglichen Komponenten.

Im besonderen bevorzugt im Rahmen der vorliegenden Erfindung besteht die Additionskomponente aus organischen mit dem Matrixpolymer nicht mischbaren Komponenten oder anorganischen Komponenten die an den Oberflächen Hydroxyl-Gruppen tragen können, wie silikatischen und/oder alumosilikatischen und/oder siliziumoxidischen und/oder aluminiumoxidischen Materialien oder Titandioxiden. Ebenso können Kohlenstoff- oder Glas- oder Steinwoll- oder Basaltfasern, ebenso wie Kohlenstoffnanoröhrchen (CNT) eingesetzt werden.

Beispielsweise seien die folgenden mineralischen Materialien genannt: Glimmer, Talkum, Wollastonit, Asbeste, Quarz, Quarzgut, Kieselsäure, Microsilica, Kaolin, calcinierte Kaoline, Xonotlit, Tobermorit, Nephelin-Syenit, Aluminiumoxid, Titandioxid, Kreide, Kalk, Sand, Kieselgur, Graphit, Ruß Kohle- bzw. Carbonfasern, Carbon-Nanotubes (CNT), Glimmer (Muskovit, Phlogopit, Sericit), Tonerden (z. B. Montmorrillonit) Kohlefasern,Carbon nano tubes (CNT), Glasflakes, Aluminiumhydroxid (ATH), Magnesiumhydroxid (MDH), Metalloxide wie z.B. Aluminiumoxid, Titandioxid, Calciumcarbonate (GCC, PCC, Marmor), Gips, Wollastonit, Basaltfasern und -mehle, Steinwollefasem, Quarzmehl, Quarzgut, Microsilica oder Feldspäte. Dies ist natürlich nur eine beispielhafte Aufzählung von möglichen Komponenten
Im Rahmen der vorliegenden Erfindung kann die Additionskomponente in körniger Form vorliegen. In einer bevorzugten Ausführungsform der vorliegenden Erfindung liegt die Füllstoffkomponente in feinteiliger Form vor, isoliert oder als Dispersion oder Suspension .

Es ist hierbei bevorzugt, dass die Additionskomponente in partikulärer Form einer Korngrößenverteilung von kleiner als 4 mm vorliegt.

Im Besonderen ist hierbei bevorzugt, dass die Additionskomponente in einer Korngrößenverteilung von 2 nm bis 350 µm vorliegt.

In einer anderen besonders bevorzugten Form liegt die Additionsphase in faserförmiger Form vor (z.B. Glasfasern, Mineralfasern, Naturfaser, Textilfasern, etc) synthetischen oder natürlichen Ursprungs.

Die vorliegend offenbarten Zwischenprodukte sind an der Oberfläche der Additionskomponente weitgehend in einer monomolekularen Schicht des Matrixpolymers, zumindest aber in Submonolagen bedeckt. Es sind auch Multilagen möglich.

Der Radikalbildner wird dabei in die innere Grenzfläche der Phasen (Additionskomponente und Matrixpolymer) eingelagert, so dass quasi eine mehrschalige Struktur aufgebaut wird.

Für den Fall, dass im Rahmen der Erfindung gewünscht wird, dass die Additionskomponente nicht vollständig mit dem Matrixpolymer verknüpft ist, kann selbstverständlich die Vernetzung auch nur teilweise vorliegen (Submonolagen).

Radikalbildner im Rahmen der vorliegenden Erfindung sind an sich bekannt, es sind Stoffe, die unter energetischer Einwirkung in Radikale zerfallen. Radikalbildner im Rahmen der vorliegenden Erfindung können sein: Photoinitiatoren, Photosensibilisatoren oder Vernetzungsmittel. Es können auch funktionelle Silane bzw. Siloxane mit funktionellen Gruppen sein, die unter energetischer Einwirkung in Radikale zerfallen und/oder eine Vernetzungsreaktion initiieren.

Bevorzugte Radikalbildner im Rahmen der vorliegenden Erfindung können sein: Photoinitiatoren:
Benzoinether, Benzil, Benzilketale, Alpha-spalter wie Alpha, alpha-Diethoxyacetophenon, alpha-Hydroxyalkylphenone, alphaAminoalkylphenone,
aromatische Keton-Coinitiatorsysteme: Benzophenone und substituierte Benzophenone, Mischlers-Keton,
Sensibilisatoren: aromatische Halogenketone: Phenacylchlorid, Desylchlorid oder 4-Chlormethylbenzophenon
Vernetzungsmittel: Trimethylol-propan-trimethacrylat, (TRIM) oder Triallylcyanurat (TAC), Triallylisocyanurat (TAIC).

Im Rahmen der vorliegenden Erfindung werden Matrixpolymere an die Oberfläche der Additionskomponente angelagert und danach mit ihr vernetzt.

Matrixpolymere im Rahmen der vorliegenden Erfindung sind ungesättigte, unverzweigte oder verzweigte, gepfropfte oder ungepfropfte Thermoplaste und Thermoplastische Elastomere. Sie können mittels Additionsreaktionen oder durch Pfropfung mit reaktiven Gruppen versehen sein.

Beispielsweise seien die folgenden Matrixpolymere genannt: Polyethylen, Polypropylen oder Gemische von Polyethylenen und Polypropylenen (z. B. gepfropft und ungepfropft), Polyamid, Polyurethan, Polyvinylchlorid, Polycarbonat, PMMA, Polyaryletherketone (z. B. PEEK), Polyoxymethylen, Polystyrole, Polyimide, Thermoplastische Elastomere und natürliche Polymere. Dies ist natürlich nur eine Auswahl grundsätzlich einsetzbarer Polymere.

Im Rahmen der vorliegenden Erfindung ist es möglich, dass die erfindungsgemäßen Zwischenprodukte weitere an sich bekannte Beimischungen enthalten.

Als Beimischungen (Additive) seien beispielsweise genannt: Flammschutzmittel wie Aluminumtrihydroxid (ATH) oder Magnesiumhydroxide (MDH), Stabilisatoren wie Metallseifen oder Organozinnverbindungen. Weichmacher wie substituierte Phtalate (z. B. Dibutylphtalat), Gleitmittel wie Paraffine oder UV-Stabilisierungsmittel oder Füllstoffe wie z. B. Marmormehl oder Silikate.

Haftvermittler und Compatibilizer im Rahmen der vorliegenden Erfindung fungieren als Benetzungshilfsmittel und können Kontaktstellen zwischen der Oberfläche der Additionskomponente und der Matrixpolymerkomponente darstellen.

Haftvermittler sind an sich bekannt. Beispielsweise seien Silane, wie H-Silane und Siloxane, wie z. B. bifunktionelle Silane bzw. teilkondensierte Silane oder funktionelle Siloxane, funktionelle Polysiloxane, Silikonöle genannt, es können auch andere Organo-Metallalkoholate oder Maleinsäureanhydrid (MSA) gepfropfte polymere Metallseifen, niedermolekulare Olefine, Fette, Wachse oder Öle, eingesetzt werden.

Beispielsweise seien die folgenden Haftvermittler genannt: Organo-Silane (z. B. AMEO^{®}) bzw. Siloxane Organo-Titanate, OrganoZirkonate, Maleinsäureanhydrid gepfropftes Polyethylen bzw. andere MSA-, Ca-Stearate, Fettsäuren.

Im Besonderen werden als Haftvermittler bevorzugt: Aminosilane oder Aminogruppen enthaltende bifunktionelle Silane, Vinylsilane, Acrylsilane, Methacrylsilane, Octylsilane oder Epoxisilane.

Compatibilizer sind Pfropf- oder Block-Copolymere.

Es wurde auch ein Verfahren zur Herstellung der Zwischenprodukte (Compounds) polymerer Werkstoffe mit Komponenten gefunden, das dadurch gekennzeichnet ist, dass der Radikalbildner an der Oberfläche der Additionskomponente konzentriert vorliegt, das Matrixpolymer hinzugeben wird und die Vernetzung durch energetische Einwirkung gestartet wird.

Der Radikalbildner kann in festem und/oder feinstteiligem und/oder flüssigem Zustand und/oder in Lösung mit der Füllstoffkomponente vermischt und auf der Oberfläche der Additionskomponente verteilt werden.

Im Allgemeinen wird bevorzugt, den Radikalbildner gleichmäßig auf der Additionskomponente zu verteilen.

Für das erfindungsgemäße Verfahren wird bevorzugt, den Radikalbildner in einem Lösemittel zu lösen und auf der Additionskomponente zu verteilen.

Als Lösemittel zur Lösung der Radikalbildner seien beispielsweise genannt: Alkohole, halogenorganische Lösemittel, Silane, Alkane und Alken sowie Ionische Flüssigkeiten.

Bevorzugte Lösemittel sind beispielsweise: Methanol, Methylenchlorid, Ethanol, Isopropanol, Aceton, Organosilane wie z. B. Aminosilane oder Octylsilane oder andere bi- oder multifunktionelle Silane und Ionische Flüssigkeiten.

Selbstverständlich ist es auch möglich, Gemische der Lösungsmittel einzusetzen.

Eine bevorzugte Ausführungsform des erfindungsgemäßen Verfahrens ist dadurch gekennzeichnet, dass der Radikalbildner und die Additionskomponente im Massen-Verhältnis kleiner 5%, bevorzugt im Verhältnis kleiner 2 % eingesetzt werden, bezogen auf die Masse der Additionskomponente.

In einer bevorzugten Ausführungsform des erfindungsgemäßen Verfahrens liegt die Additionskomponente in feinteiliger Form vor.

Es ist hierbei bevorzugt, dass die Additionskomponente in einer Korngröße von kleiner als 4 mm vorliegt.

Im Besonderen ist hierbei bevorzugt, dass die Additionskomponente in einer Korngröße von 5 nm bis 250 µm vorliegt.

In einer alternativen bevorzugten Ausführungsform liegt die Additionskomponente in Faserform vor.

Der Thermoplast und die Interphase kann als gelöstes Matrixpolymer, als Oligomer oder Prepolymer, als Monomer, gasförmig oder in feinstteiliger Form oder in Lösung oder als niedermolekulares Polymer zu der Additionskomponente mit dem Radikalbildner gegeben werden. Selbstverständlich ist es auch möglich, Gemische verschiedener Polymere einzusetzen.

Erstaunlicherweise ist es mittels Compoundierung möglich, eine Struktur aufzubauen, die es ermöglicht, die Vernetzung mit dem Polymer weitgehend auf die Oberfläche der Additionskomponente zu begrenzen und eine Vernetzung innerhalb der Polymermatrix zu vermeiden. Dadurch wird das ursprüngliche thermoplastische Verhalten der Compounds bewahrt und das so entstandene Compound ist einer Weiterverarbeitung etwa zur Formgebung zugänglich. Mit den bisher üblichen strahlenvernetzten Polymercompounds war das bislang nicht möglich bzw. nicht bekannt. Dadurch können aufwändige und zum Teil lösemittelintensive Prozesse des Beschichtens der Additionskomponenten mit dem thermoplastischen Polymer entfallen. Dazu werden das Matrixpolymer und die mit dem Radikalbildner beschichtete Additionskomponente im herkömmlichen Sinne compoundiert. Das so entstandene Compound kann entweder direkt vernetzt werden oder aber zunächst für eine Weiterverarbeitung im Sinne einer Formgebung eingesetzt werden (z.B. Spritzgießen, Blasformen, Extrudieren, ...) und dann anschließend vernetzt werden.

Die relativen Mengen des eingesetzten Radikalbildners und des Thermoplasten können in weiten Grenzen schwanken und werden durch den gewünschten Vernetzungsgrad bestimmt.

In einer bevorzugten Ausführungsform des erfindungsgemäßen Verfahrens wird auf die Oberfläche der Additionskomponente in einem ersten Schicht ein Haftvermittler aufgetragen. Dieser Schritt kann, muss aber nicht zwingend erfolgen. Der Radikalbildner wird dann im folgenden Schritt aufgetragen.

Haftvermittler im Rahmen der vorliegenden Erfindung verstärken die Haftung des Matrixpolymers auf der Füllstoffkomponente, indem er als oberflächenaktive Substanz die Benetzung mit dem Matrixpolymer begünstigt.

Haftvermittler sind an sich bekannt. Beispielsweise seien Silane, wie H-Silane und Siloxane, wie z. B. bifunktionelle Silane bzw. teilkondensierte Silane oder funktionelle Siloxane genannt, es könne auch andere Organo-Metallalkoholate eingesetzt werden.

Beispielsweise seien die folgenden Haftvermittler genannt: Organo-Silane, bzw. Siloxane (z. B. Ameo^{®}), Organo-Titanate , OrganoZirkonate, Maleinsäureanhydrid gepfropftes Polyethylen bzw. andere MSA-, CaStearate, Fettsäuren.

Im Besonderen werden als Haftvermittler bevorzugt: Aminosilane, Vinylsilane, Acrylsilane, Methacrylsilane, Octylsilane, Epoxisilane oder Aminogruppen enthaltende Silane.

Für das erfindungsgemäße Verfahren wird bevorzugt, den Haftvermittler in einem Lösungsmittel zu lösen und auf der Füllstoffkomponente zu verteilen und im Fall eines mineralischen Füllstoffs mit der Oberfläche reagieren zu lassen.

Als Lösungsmittel zur Lösung der Haftvermittler seien beispielsweise genannt:
Methanol, Ethanol, Propanol, Isopropanol, oder Toluol.

Selbstverständlich ist es auch möglich, Gemische der Lösungsmittel einzusetzen oder die Haftvermittler direkt aufzutragen.

Die Konzentration des Haftvermittlers in dem Lösungsmittel liegt im allgemeinen im Bereich von 0,1 % bis 90 Gew.-%. bevorzugt im Bereich von 20 bis 70 Gew.-%.

Nach Wirkung und gegebenenfalls Reaktion des Haftvermittlers mit der Oberfläche wird der Radikalbildner aufgebracht, das Lösemittel entfernt, anschließend der Compoundierung zugeführt. Liefert die Additionskomponente an sich hinreichend Verknüpfungsstellen, wie etwa im Falle organischer Fasern oder Oberflächen, kann auf den Schritt der Behandlung mit Haftvermittlern verzichtet werden.

Die Reaktion und damit die Vernetzung der beschichteten Additionskomponente mit dem Thermoplast im Rahmen der vorliegenden Erfindung wird durch energetische Einwirkung in an sich bekannter Weise gestartet.

In einer bevorzugten Ausführungsform der vorliegenden Erfindung wird die Reaktion durch energetische Einwirkung in Form ionisierender Strahlung initiiert.

Die energetische Einwirkung kann durch ionisierende Strahlung oder elektromagnetische Strahlung eingebracht werden. im Rahmen der vorliegenden Erfindung ist Beta-Strahlung (Elektronenstrahlen) im Bereich von 1 keV bis 150 MeV, bevorzugt im Bereich von 1 keV bis 100 MeV, im Besonderen bevorzugt im Bereich von 3 keV bis 80 MeV.

Dabei beträgt die Dosis im Rahmen der vorliegenden Erfindung 0,1 bis 500 kGy, bevorzugt 1 bis 150 kGy, im Besonderen bevorzugt 2 bis 100 kGy.

Die Bestrahlungszeit mit der jeweils einwirkenden Energie wird zur Erreichung der erwünschten Dosisleistung jeweils angepasst.

Die Bestrahlung wird so durchgeführt, dass die Polymerschmelze im Extruder direkt bestrahlt wird, oder die auslaufenden Stränge aus dem Extruder direkt bestrahlt werden, oder dass nach der Granulierung des Polymerstranges die einzelnen Granulatpartikel bestrahlt werden und so die inneren Oberflächen der Partikel gleichmäßig vernetzt werden. Vorzugsweise wird dabei das rieselfähige Schüttgut (Granulat) in einem Reaktor umgewälzt.

Das erfindungsgemäße Verfahren zur Herstellung der Zwischenprodukte kann beispielsweise wie folgt ausgeführt werden:
1. Das rieselfähige Pulver mineralischer Natur (silikatische Mehl, z. B. Quarzmehl) wird im Reaktor umgewälzt.
2. Das Silan-Lösemittelgemisch wird z.B. durch Aufsprühen zugeführt und die Partikeloberflächen mit dem Gemisch belegt (z. B. Spray-Coating).
3. Die Reaktion der Silanankopplung an die mineralische Oberfläche wird mittels thermischer Unterstützung durchgeführt.
4. Entstehende und vorhandene Lösemittel werden entfernt.
5. Die Schritte 2 bis 4 werden so lange wiederholt, bis die gewünschte nominelle Bedeckung relativ zur spezifischen Oberfläche, bestimmt nach BET, erreicht ist. Typisch wird mit einer monomolekularen Bedeckung gearbeitet. Auch andere Bedeckungsgrade sind möglich. Als Orientierung werden ca. 0,5 Gew.-% eines Aminosilans auf ein Mineralmehl mit ca. 8 m²/g spezifischer Oberfläche aufgetragen.
6. Die Radikalbildner werden direkt oder in Lösung auf die Partikeloberflächen aufgetragen (typisch: Spray-Coating). Zur Orientierung werden bei obigem Mineralmehl ca. 0,5 Gew.-% des Radikalbildners aufgetragen, so dass die Oberfläche der oberflächen-modifizierten mineralischen Komponente weitgehend bedeckt ist. Dabei kann es dienlich sein, ein stärkeres Mischaggregat z.B. einen Kneter oder einen Lödige-Mischer oder einen Henschelmischer oder eine Mühle zu nutzen.
8. Das Lösemittel wird entfernt, während das Mischaggregat arbeitet.
9. Es wird Vakuum angelegt.
10. Nach dem Trocknen, kann das Pulver einer Compoundierung zugeführt werden.
11. Die Bestrahlung wird vorzugsweise so durchgeführt, damit alle Partikeloberflächen gleichmäßig vernetzt werden. Der Grad der Bestrahlung und der Vernetzung richtet sich nach den Anforderungen im Endprodukt und wird über die Bestrahlungsenergie und die Bestrahlungszeit eingestellt. Die Bestrahlung kann räumlich an anderer Stelle durchgeführt werden als der Compoundierung und ist unabhängig von der Präparation der Beschichtung. Hierfür stehen kommerzielle Anlagen zur Verfügung. Die Bestrahlungsdosis beträgt ca. 100 kGy, je nach gewünschter Vernetzungsstärke. Die Schichtdicke sollte der Eindringtiefe proportional sein und sollte in diesem Falle zur Bestrahlung im Bereich von etwa 4mm liegen.
12. Das fertige Zwischenprodukt kann einer Weiterverarbeitung zum Compound zugeführt werden, welches anschließend zur thermoplastischen Weiterverarbeitung zur Formgebung der Bauteile zur Verfügung steht.

In einer besonderen Form kann die Bestrahlung des Werkstofffes im Sinne der Erfindung auch nach dem Formgebungsprozess (z.B. Spritzgießen) durchgeführt werden. Die so hergestellten Bauteile weisen alle charakteristischen Merkmale der inneren Vernetzung an der Additionsoberfläche (z.B. der Füllstoffoberfläche) auf. Die Bestrahlungsdosis sollte ähnlich wie weiter oben appliziert werden.

Auf Basis der vorliegend offenbarten Zwischenprodukte eröffnet sich eine neue Klasse von polymeren Werkstoffen, bei denen die Additionskomponente mit dem Polymer vernetzt ist.

Auch offenbart werden
Werkstoffe und Bauteile auf Basis von Thermoplasten und gegebenenfalls anderen Polymeren, Additionskomponenten wie z.B. mineralischen Komponenten und gegebenenfalls anderen Beimischungen und einem Radikalbildner, die dadurch gekennzeichnet sind, dass der Radikalbildner eine Reaktion initiiert, wonach die Oberflächen der Additionskomponenten mit den thermoplastischen Polymerketten chemisch vernetzt sind.

Die Komponenten der Werkstoffe bestehen aus
A: Additionskomponenten A1 und/oder A2
A1: mineralischen Komponenten, die an der Oberfläche Hydroxylgruppen tragen können und/oder
A2: Komponenten die mit der Matrixphase nicht oder kaum Mischbar sind und organischen Ursprungs sind.
B: einem auf der Oberfläche der mineralischen Komponente chemisch gebundenen Haftvermittler
C: einem Radikalbildner oder Mischungen aus verschiedenen, bekannt als Photoinitiatoren, Vernetzungsverstärker, Photosensibilisatoren
D: thermoplastischen Polymeren, Oligomeren oder Prepolymeren oder Monomeren ( jeweils einzelnen oder Mischungen (Blends) daraus), die mit der Oberfläche der mineralischen Komponente vernetzt sind, gepfropft oder ungepfropft.
E: einem thermoplastischen Matrixpolymer, das mit D identisch sein kann, oder auch verschieden.

Beispiele für die einzelnen sind:
A: natürliche oder synthetische Materialien, mit variabler äußerer Form (z.B. Fasern, Plättchen, Partikel, Mischungen daraus), kristallin oder amorpher Struktur, oder Mischungen daraus. Die chemische Natur der mineralischen Phase kann oxidischer, oder silikatischer Natur sein, ebenso Hydroxide und Oxihydrate, sowie Mischoxide sind relevant, genauso wie reine Metalle und Metalllegierungen. Beispiele sind: Aluminiumoxid, Titandioxid, sowie deren Oxihydrate und Hydroxide. Beispiele für silikatische Komponenten sind: Quarz, Cristobalit, Talkum, Kaolin, Metakaolin, gebrannter Kaolin, Glimmer (Muskovit, Phlogopit, Vermiculit), Kieselgur (Siliceous earth), Neuburger Kieselerde, Glaskugeln, Hohlglaskugeln, Glasflakes, Kieselglas/Quarzgut, Feldspäte Plasorite, Silikate, Wollastonit, Basalt, Nephelin, Nephelin-Syenit, Perlit (gebläht und ungebläht), Tone, Calsiumsilikate (CS-Phasen-Minerale) und Calciumsilikathydrate (CSH-Phasen-Minerale) z.B. Tobermorit, Xonotlit, Calciumcarbonate, Glasfasern (E-, A-, C-, D-, R-, AR-), Alumosilikate, organische Fasern (Endlos oder geschnitten) natürlichen oder synthetischen Ursprungs, oder Polymermehle, Suspensionen als beispielhafte Aufzählung.
B: Metallalkoholate: Silane, Titanate, Aluminate, Zirkonate, (funktionelle)-Siloxane, Silikonöle, MSA-gepfropfte Polymere, Metall-Seifen, Olefine. Die Metallalkoholate, insbesondere die Silane, als bifunktionelle Silane werden beschrieben in der Form:

   R₁-Si-R₍₂₋₄₎ ,

   wobei R1 eine hydrolisierbare Alkoxgruppe ist (z.B. Methoxy- oder Ethoxy-) oder einfach Hydroxy- oder Chloro oder Wasserstoff bedeutet. R(2-4) gleich oder verschieden sind und organofunktionelle Gruppen darstellen.

R2-R4 können Kombinationen aus den folgenden organofunktionellen Gruppen sein:
Amino-, z.B.: Dynasilan^{®} AMEO : 3-AminoPropyltrietoxysilan z.B.: Dynasilan^{®} DAMO, N-(2-Aminoethyl,-3-AminopropylTrimethoxysilan Epoxi- (Glycidyl-), Alky-, Octyl-, z.B.: Dynasilan^{®} OCTMO: Trimethoxyoctylsilan, Methyl-, Alkenyl-, Alkoxy-, Carboxy-, Säurenahydride-, Aryl-, Phenyl-, Vinyl-, _{z.B.}: Dynasilan^{®} VTMO: Vinyltrimethoxysilan, Acyl-, Methacryl, z.B. : Dyansilan^{®} MEMO: 3-Methacrylpropyl-Trimethoxysilan, Nitril-, Acrylnitril-, Amido-, Photoinitiator, Ureido-, Isocyanat-, Isocyanurat-, Sulfonido-, Mercapto-, Thio-, Sulfo-, Sulfino-, Alkylamino-, Dialkyl-, Amino-, Imino-, Nitro-, Nitroso-, Oxo-, Formyl-, Chloro, Bromo-, Fluoro-, lodo-, Keto-Gruppen .

Ebenso können teilkondensierte Silane, die sich aus obiger Struktur ableiten, zur Anwendung kommen.

C: Radikalbildner sind Photoinitiatoren, Vernetzungsverstärker oder Photosensibilisatoren und Radikalinitiatoren. Die Photoinitiatoren entstammen der Gruppen der Benzophenone und dessen Derivate, der Dialkylbenzilketale und der a-Diketone, der Acylphosphinoxide der Thionathone, Aminocoinitiatorsysteme und der Aminoacrylate. Dazu zählen:
die Alkylbenzophenone: 2-Methyl-Benzophenon, 4-Methyl-Benzophenon, 2,4-Dimehtyl-Benzophenon, 3,4-Dimehtyl-Benzophenon, 4-lsopropylBenzophenon, 4-Dodecyl-Benzophenon, 2,4,6- Trimethyl-Benzophenon, 3,3-Dimethyl-4-methoxybenzophenon, 4-Phenylbenzophenon die Dialkoxyacetophenonel Benziketale: ,4'-Bisdimethylamino- Benzophenon ("Michlersketon"), 2,2' Dimethoxy-2-phenylacetophenon ("Benzildimethylketal"), 1-(4-Isopropylphenyl)-2-hydroxy-2methylpropanon-1-on, 2-Hydroxy-2-methyl-1-phenylpropan-1-on ("Doracur 1173 ^{®}"), (1-Hydroxycyclohexyl)-Phenylketon,
die Halogenbenzophenone: Chlor-Derivate, 2-Chlor-Benzophenon, 4- Chlor-Benzophenone, 2,2'-Dichlor-Benzophenone, die Alkoxy- Alkylthioderivate: 2-, 3-, 4-methoxy-Benzophenon, 2-, 4Methylthio-Benzophenone, 2-Ethoxy-Benzophenone, 4-PropoxyBenzophenone, 4-Butoxy-Benzophenone, 4-Isopropoxy-Benzophenone,
die Carbonesterderivate: 2-Methoxycarbonyl-Benzophenone, 3-Methoxycarbonyl-Benzophenone, 2- oder 4-EthoxycarbonylBenzophenone, 2- oder 4-lsopropoxycarbonyl-Benzophenone, 4-tert.Butoxycarbonyl-Benzophenone, 2-Butoxycarbonyl-Benzophenone, 2,2'-Diethoxycarbonyl-Benzophenone,
die Dialkylbenzilketale/alpha-Diketone: α-Aminoalkyphenone, Benzoinether, Benzoinbutylether, Benzoinisopropylether, 10Phenanthrenchinon, 1-Benzoylcyclohexanonol ("Irgacure 184 (^{®})"), 2(Dimethylamino-ethylacrylat), Silylbenzylether, Dodecylbenzophenon, Benzil, die Acylphosphinoxide: Benzoylphosphinsäurediethylester, 2,4,6Trimethylbenzoylphosphinoxid ("TMDPO"), 2,4,6Trimethylbenzoylethoxyphenylphosphinoxid ("TMPDO"), Bis(2,6dimethoxybenzoyl)-2,4,4-trimethyl pentylphosphinoxid, die Thioanthone: 2-/4-Chlorthioxanthon, 2-/4-lsopropylthioxanthon, 2,4-Dimethylthioxanthon, die Aminocoinitiatorsysteme: N-Methyldiethanolamin, Triethanolamin, die Aminoacrylate: 2-(Dimethylamino)ethylacrylat, oder die Radikalbildner: Azo-bis(isobutyronitril) "AIBN" Azobis-(4-cyanvaleriansäure), Dibenzoylperoxid , Dilauroylperoxid , tert.-Butylperoctat, tert.Butylperbenzoat, Di-(tert.-butyl)-peroxid, Benzpinakol, 2,2'-Di(C1-C8alkyl)-Benzpinakole, Benzoinether, Dialkylbenzilketal, Dialkoxyacetophenon, Acylphosphinoxid, 9,1 O-Phenanthrenchinon, Diacetyl, Furil, Anisil, 4,4'-Dichlorbenzil, 4,4'-Dialkoxybenzil, Campherchinon, die Photosensibilisatoren: Perylen, Thioxanthon-Derivate, AnthracenDerivate, die Vernetzungsmittel aus der Gruppe der Acrylate: Trimethylo-Propan-trimethacrylat ("TRIM"), Pentaerythriol- Triacrylat, Pentaerythriol- trimethacrylat, Pentaerithriol-Pentaacrylat, DipentaerythrolPentamethacrylat, Ditri methylol propantertaacrylat, Ditri methylol propantetramethacrylat, der Gruppe der Cyanate/ Cyanurate: Triallyl-Cyanurat ("TAC"), der Gruppe der Isocyanate/Isocyanurate: Triallyisocyanurat ("TRAIC"), Trimethallylisocyanurat ("TMAIC"), sonstige: PolymethylenPolyphenylen-N-Maleinimid, Tris( 4-vinyloxybutyl)- Trimellitat, Bis(4- vinyloxybutyl )-Isophthalat

### D: die Thermoplaste als Polymere, Oligomere, Prepolymere und Monomere

### Polyolefine

| | |
|---|---|
| CSM | Chlorsulfoniertes Polyethylen |
| EEA | Ethylen-Ethylacrylat Copoplymer |
| EPDM | Ethylen-Propylen-Terpolymer |
| EPM | Ethylen-Propylen-Elastomer |
| EVA | Ethylen-Vinylacetat |
| PE | Polyethylen (PE-LD, PE-HD, PE-LLD) |
| PE-C | Chloriertes Polyethylen |
| PEO | Polyethylenoxid |
| PP | Polypropylen |
| PA | Polyamid 6, PA 6.6, PA 11, PA 12, Gusspolyamid u.a. Polyamide |
| PVAL | Polyvinylalkohol |

### Halogenierte Polymere:

| | |
|---|---|
| CSM | Chlorsulfoniertes Polyethylen |
| ETFE | Ethylentetrafluorethylen |
| PEP | Polyfluorethylenpropylen |
| FPM | Fluorelastomer |
| PE-C | Chloriertes Polyethylen |
| PVC | Polyvinylchlorid |
| PVDF | Polyvinylidenfluorid |
| PVF | Polyvinylfluorid |

### Thermoplastische Elastomere:

| | |
|---|---|
| FPM | Fluorelastomer (thermoplastisch) |
| TPE-E | Polyetherester-Copolymere TPE-O auf Polyolefin-Basis |
| TPE-S | auf Styrol-Basis |
| TPE-U | Polyurethan |
| TPE-V | Polyolefin mit vulkanisierten Blöcken |

E: stellt Bausteine wie D als thermoplastische polymere Matrix dar.

In einer besonderen Form werden die hier beschriebenen Additionskomponenten mit Polymeren kombiniert, die für die klassische Strahlenvernetzung eingesetzt werden, also Polymere, die mit Vernetzungsmitteln versetzt wurden. Eine Bestrahlung kommt dann erst nach der Formgebung in Frage.

Gegenstand der vorliegenden Erfindung ist auch ein Verfahren zur Herstellung von polymeren Werkstoffen auf Basis von Thermoplasten und gegebenenfalls anderen Polymeren, Additionskomponenten und gegebenenfalls anderen Beimischungen und einem Radikalbildner, dadurch gekennzeichnet, dass der Radikalbildner eine chemische Reaktion initiiert, wonach die Oberfläche der Additionskomponente mit der thermoplastischen Polymerphase chemisch vernetzt ist.

Die energetische Einwirkung wird mittels Strahlung bewirkt, die in Form von Elektronenstrahlen, UV-Strahlen oder Röntgenstrahlen auf die Partikel einwirkt.

Gegenstand der vorliegenden Erfindung ist auch die Verwendung von polymeren Werkstoffen auf Basis von Thermoplasten und gegebenenfalls anderen Polymeren, mineralischen Komponenten und gegebenenfalls anderen Beimischungen und einem Radikalbildner, wobei der Radikalbildner, der die Oberfläche der Additionskomponente bedeckt, eine Reaktion initiiert, wonach die Polymerketten an die Oberfläche der Additionskomponente gebunden sind, als thermoplastisches Halbzeug in gängigen thermoplastischen Formgebungsverfahren (sogenanntes Urformen, Fügen und Spanen).

Als Beispiele seien genannt das Extrusionsverfahren oder Spritzguss-Verfahren, oder das Blasformverfahren, als Ansaugrohre in Fahrzeugen, Kraftstofftanks Fahrzeugen, Trägerplatten in Elektro- und Elektronikanwendungen, Gleitlagern, Gleitförderern, Essbesteck, Rohre, Profile, Schläuche, Platten, Kabelummantelungen, Schuhsohlen, Fasern, Borsten, Gehäuse, Zahnräder, Schrauben, Dichtungen, Ventilatoren, Stangen, Befestigungen und Halterungen im Automobil, insbesondere unter der Motorhaube, Spulenkörper, Blasformteile, Polymerbetone, Plattenware oder Halbzeuge zur Weiterbearbeitung.

Die offenbarten polymeren Werkstoffe zeichnen sich im Vergleich zu Werkstoffen, bei denen die mineralische Komponente nicht mit dem Polymer vernetzt ist, durch erhöhte chemische und mechanische Eigenschaften aus.

Mit den offenbarten Werkstoffen kann man zum Beispiel eine um mindestens 10 % erhöhte Zugfestigkeit, ein um mindestens 10 % erhöhtes E-Modul, eine um mehr als 15 K erhöhte Wärmeformbeständigkeit und eine um mindestens 15 % erhöhte Schlagzähigkeit mit und ohne Kerbe, je nach verwendetem Füllstoffsystem und jeweils im Vergleich zu vergleichbaren und/oder an sich bekannten Werkstoffen erhalten.

## Patentansprüche

1. Verfahren zur Herstellung von Zwischenprodukten für polymere Werkstoffe mit Additionskomponenten oder Bauteilen daraus, **dadurch gekennzeichnet, dass**
ein Radikalbildner auf der Additionskomponente verteilt wird,
ein thermoplastisches Polymer mittels Extrusions-Compoundierung auf die mit dem Radikalbildner versehene Additionskomponente aufgebracht wird und
die Vernetzung durch energetische Einwirkung mittels Elektronenstrahlen und/oder UV- und/oder Röntgenstrahlen oder Mischungen daraus, elektromagnetischer Strahlung oder ionisierender Strahlung, gestartet wird, wonach die Polymerketten mit der Oberfläche der Additionskomponente chemisch kovalent gebunden sind, wobei mittels der Compoundierung eine Struktur aufgebaut wird, die die Vernetzung mit dem Polymer weitgehend auf die Oberfläche der Additionskomponente begrenzt und eine Vernetzung innerhalb der Polymermatrix vermeidet.

2. Verfahren nach Anspruch 1, **dadurch gekennzeichnet, dass** der Radikalbildner in festem und/oder feinstteiligem und/oder flüssigem Zustand und/oder in Lösung mit einer Füllstoffkomponente vermischt und auf der Oberfläche der Additionskomponente verteilt wird.

3. Verfahren nach einem der Ansprüche 1 oder 2, **dadurch gekennzeichnet, dass** die Additionskomponente in feinteiligem Zustand mit einer Längenausdehnung von mindestens einer Dimension < 4mm vorliegt und/ oder in Faserform.

4. Verfahren nach einem der Ansprüche 1 bis 3, **dadurch gekennzeichnet, dass** ein Haftvermittler auf die Oberfläche der Additionskomponente in einem ersten Schritt und der Radikalbildner im folgenden Schritt aufgetragen wird.

5. Verfahren nach Anspruch 4, **dadurch gekennzeichnet, dass** der Haftvermittler und der Radikalbildner im Molverhältnis 100: 1 bis 1: 100 eingesetzt wird.

6. Verfahren nach einem der Ansprüche 4 oder 5, **dadurch gekennzeichnet, dass** die Additionskomponente mit dem Haftvermittler bedeckt wird und dann der Radikalbildner verteilt wird.

7. Verfahren nach einem der Ansprüche 4, 5 oder 6,
**dadurch gekennzeichnet,**
**dass** als Haftvermittler ein Silan und/oder ein bifunktionelles Silan und/oder Siloxan oder funktionelles Polysiloxan eingesetzt wird.

8. Verfahren zur Herstellung von polymeren Werkstoffen auf Basis von Zwischenprodukten, erhältlich nach dem Verfahren nach einem der Ansprüche 1 bis 7, auf Basis von thermoplastischen Polymeren und gegebenenfalls anderen Polymeren, Additionskomponenten und gegebenenfalls anderen Beimischungen, Haftvermittlern und einem Radikalbildner, oder Bauteilen daraus, **dadurch gekennzeichnet, dass** eine Kopplungsreaktion durch energetische Einwirkung initiiert wird in Form von Strahlung und/oder in Form von hochenergetischen Elektronenstrahlen und/oder in Form von UV-Strahlung.

9. Verfahren nach Anspruch 1, **dadurch gekennzeichnet, dass** die Einwirkung der Strahlung während der Compoundierung durchgeführt wird, indem die Polymerschmelze in einem Extruder direkt und/oder der auslaufende Polymerstrang aus einem Extruder und/oder das Granulat bestrahlt werden.

10. Verfahren nach Anspruch 9, **dadurch gekennzeichnet, dass** nach der Granulierung des Polymerstranges die einzelnen Granulatpartikel bestrahlt und so die inneren Oberflächen der Partikel gleichmäßig vernetzt werden, wobei insbesondere dabei das rieselfähige Schüttgut (Granulat) in einem Reaktor umgewälzt wird.

11. Verfahren nach Anspruch 8, **dadurch gekennzeichnet, dass** die Einwirkung der Strahlung auf das Bauteil an sich, also nach der Formgebung, einwirkt und dann die Oberflächenvernetzung der Oberfläche der Additionskomponente mit dem thermoplastischen Polymer durchgeführt wird.

12. Verwendung von polymeren Werkstoffen auf Basis von Zwischenprodukten, erhältlich nach dem Verfahren nach einem der Ansprüche 1 bis 7, auf Basis von thermoplastischen Polymeren und gegebenenfalls anderen Polymeren, Additionskomponente und gegebenenfalls anderen Beimischungen und einem Radikalbildner, wobei der Radikalbildner eine Reaktion initiiert, wonach thermoplastische Polymerketten eine Oberfläche einer mineralischen Komponente bedecken und die Polymerketten an der Oberfläche der Additionskomponente chemisch kovalent gebunden sind, als thermoplastisches Halbzeug in thermoplastischen Formgebungsverfahren.

13. Verwendung von Bauteilen aus polymeren Werkstoffen auf Basis von Zwischenprodukten, erhältlich nach dem Verfahren nach einem der Ansprüche 1 bis 7, auf Basis von thermoplastischen Polymeren und gegebenenfalls anderen Polymeren, oberflächen-modifizierten mineralischen Komponenten und gegebenenfalls anderen Beimischungen und einem Radikalbildner, wobei der Radikalbildner eine Reaktion initiiert, wonach thermoplastische Polymerketten eines thermoplastischen Polymers die Oberfläche einer Additionskomponente bedecken und die Polymerketten an der Oberfläche der Additionskomponente chemisch kovalent gebunden sind, als: Ansaugrohre in Fahrzeugen, Kraftstofftanks Fahrzeugen, Trägerplatten in Elektro- und Elektronikanwendungen, Gleitlagern, Gleitförderern, Essbesteck, Rohre, Profile, Schläuche, Platten, Kabelummantelungen, Schuhsohlen, Fasern, Borsten, Gehäuse, Zahnräder, Schrauben, Dichtungen, Ventilatoren, Stangen, Befestigungen und Halterungen im Automobil, insbesondere Bauteile im PKW unter der Motorhaube, Spulenkörper, Blasformteile, Polymerbetone.

## Claims

1. Method for producing intermediate products for polymeric materials with addition components, or parts made therefrom, **characterised in that**
a radical former is distributed on the addition component,
a thermoplastic polymer is applied by means of extrusion compounding to the addition component provided with the radical former, and
crosslinking is started by energetic impact by means of electron beams and/or UV- and/or X-rays or mixtures thereof, electromagnetic radiation or ionising radiation,
whereby the polymer chains are chemically covalently bonded to the surface of the addition component, wherein, by means of the compounding, a structure is built up which limits the crosslinking with the polymer largely to the surface of the addition component and avoids crosslinking within the polymer matrix.

2. Method according to claim 1, **characterised in that** the radical former in the solid and/or very finely divided and/or liquid state and/or in solution is mixed with a filler component and is distributed on the surface of the addition component.

3. Method according to either claim 1 or claim 2, **characterised in that** the addition component is present in the finely divided state with a linear extent of at least one dimension < 4 mm and/or in fibre form.

4. Method according to any one of claims 1 to 3, **characterised in that** an adhesion promoter is applied to the surface of the addition component in a first step and the radical former is applied in the following step.

5. Method according to claim 4, **characterised in that** the adhesion promoter and the radical former are used in a molar ratio of from 100:1 to 1:100.

6. Method according to either claim 4 or claim 5, **characterised in that** the addition component is covered with the adhesion promoter and then the radical former is distributed.

7. Method according to any one of claims 4, 5 or 6, **characterised in that** there is used as the adhesion promoter a silane and/or a bifunctional silane and/or siloxane or functional polysiloxane.

8. Method for producing polymeric materials based on intermediate products, obtainable by the method according to any one of claims 1 to 7, based on thermoplastic polymers and optionally other polymers, addition components and optionally other admixtures, adhesion promoters and a radical former, or parts made therefrom, **characterised in that** a coupling reaction is initiated by energetic impact in the form of radiation and/or in the form of high-energy electron beams and/or in the form of UV radiation.

9. Method according to claim 1, **characterised in that** the action of the radiation during compounding is performed **in that** the polymer melt is irradiated directly in an extruder and/or the polymer strand emerging from an extruder and/or the granulate is irradiated.

10. Method according to claim 9, **characterised in that**, after granulation of the polymer strand, the individual granulate particles are irradiated and thus the inner surfaces of the particles are uniformly crosslinked, wherein the free-flowing bulk material (granulate) is in particular circulated in a reactor.

11. Method according to claim 8, **characterised in that** the impact of the radiation acts on the part per se, that is to say after shaping, and then the surface crosslinking of the surface of the addition component with the thermoplastic polymer is carried out.

12. Use of polymeric materials based on intermediate products, obtainable by the method according to any one of claims 1 to 7, based on thermoplastic polymers and optionally other polymers, addition components and optionally other admixtures and a radical former, wherein the radical former initiates a reaction, whereby thermoplastic polymer chains cover a surface of a mineral component and the polymer chains are chemically covalently bonded to the surface of the addition component, as a thermoplastic semi-finished product in thermoplastic shaping processes.

13. Use of parts made of polymeric materials based on intermediate products, obtainable by the method according to any one of claims 1 to 7, based on thermoplastic polymers and optionally other polymers, surface-modified mineral components and optionally other admixtures and a radical former, wherein the radical former initiates a reaction,whereby thermoplastic polymer chains of a thermoplastic polymer cover the surface of an addition component and the polymer chains are chemically covalently bonded to the surface of the addition component, as: intake manifolds in vehicles, fuel tanks in vehicles, mounting plates in electrical and electronic applications, sliding bearings, slide conveyors, cutlery, pipes, profiles, hoses, plates, cable sheathings, shoe soles, fibres, bristles, casings, gear wheels, screws, gaskets, fans, rods, fastenings and mountings in the automotive sector, in particular parts in passenger cars beneath the bonnet, coil bodies, blow-moulded parts, polymer concretes.

## Revendications

1. Procédé de fabrication de produits intermédiaires pour matériaux polymères avec des composants d'addition ou des éléments de ceux-ci, **caractérisé en ce que**
un formateur de radicaux est réparti sur le composant d'addition,
un polymère thermoplastique est appliqué sur le composant d'addition pourvu du formateur de radicaux au moyen du compoundage par extrusion et
la réticulation est lancée par action énergétique au moyen de faisceaux d'électrons et/ou de rayons UV et/ou X ou de mélanges de ceux-ci, de rayonnement électromagnétique ou de rayonnement ionisant,
selon lequel les chaînes polymères sont liées chimiquement de manière covalente avec la surface du composant d'addition, une structure qui limite largement la réticulation avec le polymère à la surface du composant d'addition et évite une réticulation à l'intérieur de la matrice polymère étant construite au moyen du compoundage.

2. Procédé selon la revendication 1, **caractérisé en ce que** le formateur de radicaux est mélangé à l'état solide et/ou finement divisé et/ou liquide et/ou en solution avec un composant de charge et est réparti sur la surface du composant d'addition.

3. Procédé selon l'une des revendications 1 ou 2, **caractérisé en ce que** le composant d'addition est présent à l'état finement divisé avec une extension longitudinale d'au moins une dimension < 4 mm et/ou sous forme de fibre.

4. Procédé selon l'une des revendications 1 à 3, **caractérisé en ce qu'**un agent d'adhérence est appliqué sur la surface du composant d'addition dans une première étape et le formateur de radicaux à l'étape suivante.

5. Procédé selon la revendication 4, **caractérisé en ce que** l'agent d'adhérence et le formateur de radicaux sont mis en œuvre en un rapport molaire de 100:1 à 1:100.

6. Procédé selon l'une des revendications 4 ou 5, **caractérisé en ce que** le composant d'addition est recouvert avec l'agent d'adhérence et le formateur de radicaux est ensuite réparti.

7. Procédé selon l'une des revendications 4, 5 ou 6, **caractérisé en ce qu'**un silane et/ou un silane et/ou siloxane bifonctionnel ou polysiloxane fonctionnel est/sont mis en œuvre en tant qu'agent d'adhérence.

8. Procédé de fabrication de matériaux polymères à base de produits intermédiaires pouvant être obtenus d'après le procédé selon l'une des revendications 1 à 7, à base de polymères thermoplastiques et le cas échéant d'autres polymères, de composants d'addition et le cas échéant d'autres mélanges, d'agents d'adhérence et d'un formateur de radicaux, ou d'éléments de ceux-ci, **caractérisé en ce qu'**une réaction de couplage est initiée par une action énergétique sous la forme de rayonnement et/ou sous la forme de faisceaux d'électrons hautement énergétiques et/ou sous la forme de rayonnement UV.

9. Procédé selon la revendication 1, **caractérisé en ce que** l'action du rayonnement s'effectue pendant le compoundage, du fait que la matière fondue polymère est directement irradiée dans une extrudeuse et/ou le boudin polymère sortant d'une extrudeuse et/ou le granulé sont irradiés.

10. Procédé selon la revendication 9, **caractérisé en ce que**, après la granulation du boudin polymère, les particules individuelles de granulé sont irradiées et ainsi les surfaces intérieures des particules sont réticulées de manière uniforme, la matière en vrac écoulable (granulé) étant alors en particulier brassée dans un réacteur.

11. Procédé selon la revendication 8, **caractérisé en ce que** l'action du rayonnement fait effet sur l'élément en soi, donc après le formage, et la réticulation superficielle de la surface du composant d'addition avec le polymère thermoplastique est ensuite effectuée.

12. Utilisation de matériaux polymères à base de produits intermédiaires pouvant être obtenus d'après le procédé selon l'une des revendications 1 à 7, à base de polymères thermoplastiques et le cas échéant d'autres polymères, de composant d'addition et le cas échéant d'autres mélanges et d'un formateur de radicaux, le formateur de radicaux initiant une réaction, selon laquelle des chaînes polymères thermoplastiques recouvrent une surface d'un composant minéral et les chaînes polymères sont liées chimiquement de manière covalente à la surface du composant d'addition, en tant que produit semi-fini thermoplastique dans des procédés de formage thermoplastique.

13. Utilisation d'éléments de matériaux polymères à base de produits intermédiaires pouvant être obtenus d'après le procédé selon l'une des revendications 1 à 7, à base de polymères thermoplastiques et le cas échéant d'autres polymères, de composants minéraux modifiés en surface et le cas échéant d'autres mélanges et d'un formateur de radicaux, le formateur de radicaux initiant une réaction, selon laquelle des chaînes polymères thermoplastiques d'un polymère thermoplastique recouvrent la surface d'un composant d'addition et les chaînes polymères sont liées chimiquement de manière covalente à la surface du composant d'addition, en tant que : - tubes d'aspiration dans des véhicules, véhicules réservoirs de carburant, plaques supports dans des applications électriques et électroniques, paliers lisses, convoyeurs de glissement, couverts, tubes, profilés, tuyaux, panneaux, gaines de câble, semelles de chaussures, fibres, brosses, boîtiers, roues dentées, vis, joints, ventilateurs, tiges, fixations et supports dans l'automobile, en particuliers éléments dans les voitures de tourisme sous le capot du moteur, corps de bobines, pièces moulées par soufflage, bétons polymères.
